# EUROPEAN PATENT APPLICATION

(11) **EP 2 540 607 A1**
(43) Date of publication of application: **02.01.2013**
(21) Application number: 11172375.5
(22) Date of filing: 01.07.2011
(51) Int. Cl.: B62M 3/10

(54) **Bicycle Pedal**

(71) Applicant: Lin, Chang Hui, Province of China (TW)
(72) Inventor: Lin, Chang Hui, Province of China (TW)
(74) Representative: Beck & Rössig European Patent Attorneys

(57) **Abstract**

A bicycle pedal includes a lateral spindle (11) parallel to an X-axis and perpendicular to a Y-axis the X-axis, and includes an inclined surface (62) formed in the inner and front side portion (60) and tilted outwardly and tilted relative to the Y-axis for a tilting angle "A" ranged from five (5) to twenty five (25) degrees, and includes another inclined surface (92) formed in the outer and rear side portion (90) and tilted inwardly and tilted relative to the Y-axis and parallel to the feet of the user for supporting the feet of the user and to be effectively actuated by the user, and includes one or more air passages (41, 51), air pathways (61, 71, 81, 91) or openings (21, 31) for air circulating purposes.

## Description

The invention relates to a bicycle pedal including an outwardly extended structure to be effectively stepped or actuated by the user.

Typical bicycle pedals comprise a pedal body attached on a pedal supporting spindle and to be suitably stepped or actuated by the user. However, the toe portions of the feet of the user are located slightly outwardly relative to the heel portions such that the pedal bodies may not suitably support the feet and such that the pedal bodies may not be effectively stepped or actuated by the user.

The invention is to provide a bicycle pedal including an outwardly extended structure to be effectively stepped or actuated by the user.
FIG. 1 is a perspective view of a bicycle pedal;
FIG. 2 is a top plan schematic view of the bicycle pedal;
FIG. 3 is a rear plan schematic view of the bicycle pedal;
FIG. 4 is a partial cross sectional view; and
FIG. 5 is an exploded and top plan schematic view.

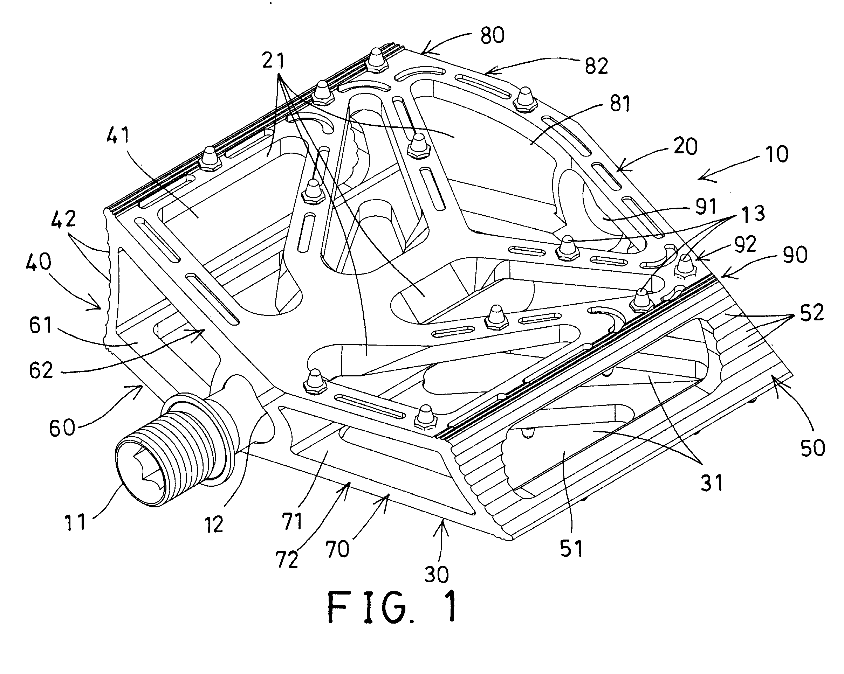

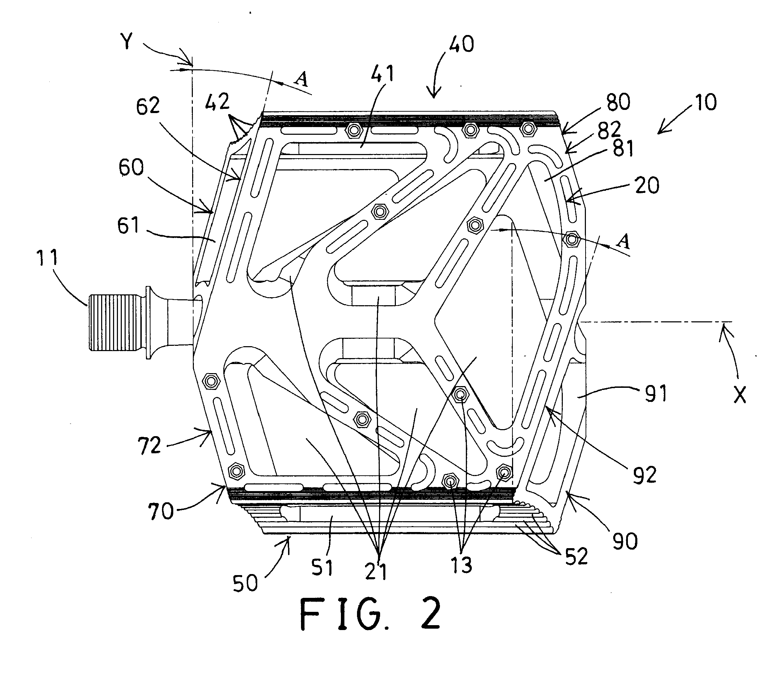

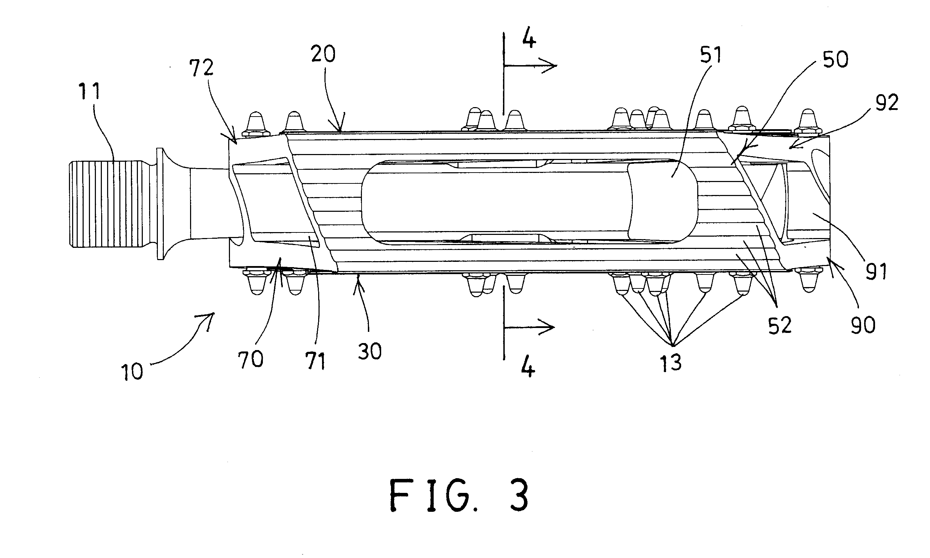

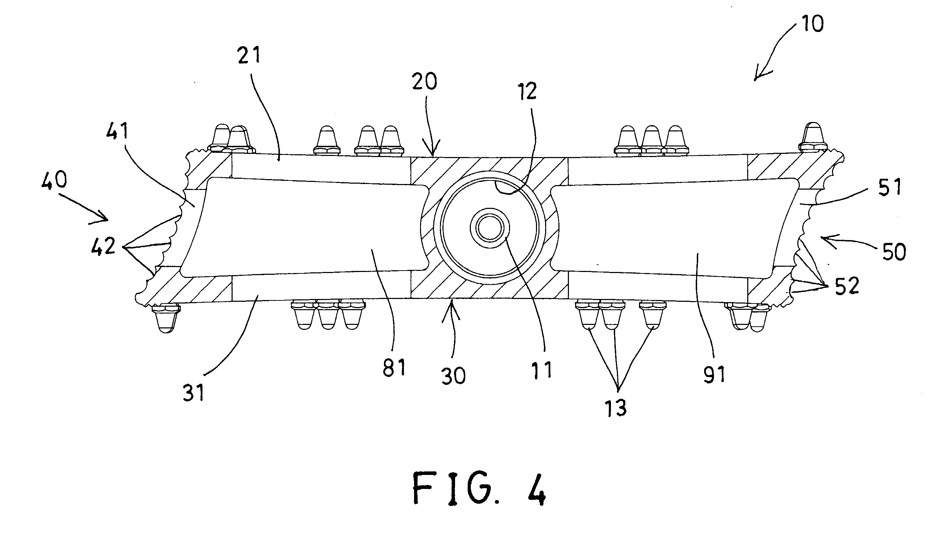

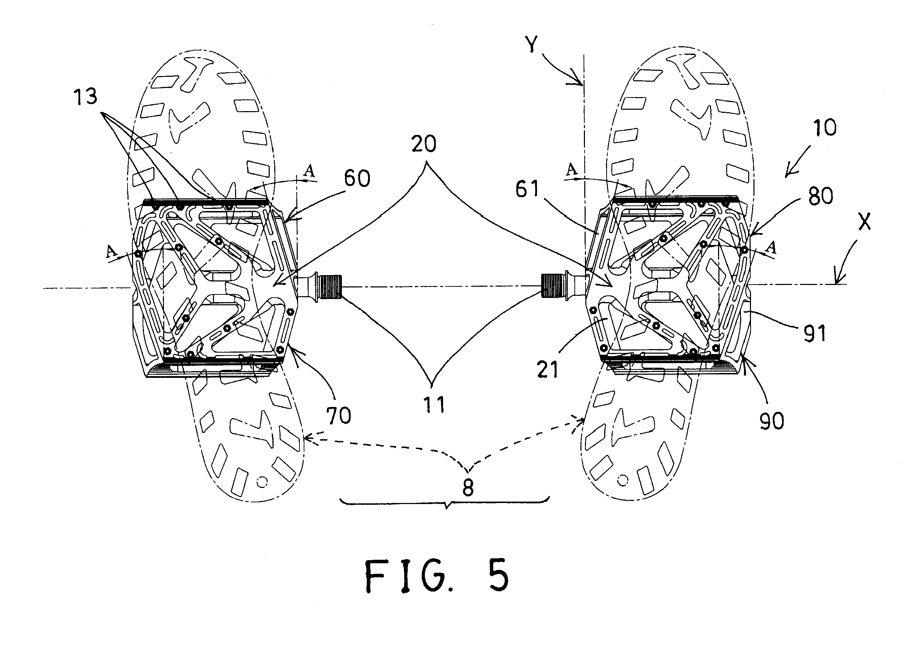

Referring to FIGS. 1-4, a bicycle pedal comprises a pedal body 10 including a lateral spindle 11 engaged in a groove 12 (FIGS. 1, 4) and parallel to an X-axis of the pedal body 10, and a Y-axis is perpendicular to the X-axis, the pedal body 10 includes an upper portion or surface 20, a bottom portion or surface 30 parallel to the upper portion or surface 20, a concave front portion 40, a concave rear portion 50 parallel to the front portion 40, an inner and front side portion 60, an inner and rear side portion 70, an outer and front side portion 80, and an outer and rear side portion 90, and includes a number of pegs 13 extended from the upper and the bottom portions or surfaces 20, 30. A bicycle (not shown) may include a pair of pedal bodies 10 (FIG. 5) mirror symmetric with each other.

The pedal body 10 includes one or more openings 21 formed in the upper portion or surface 20, one or more openings 31 formed in the bottom portion or surface 30, one or more air passages 41, 51 formed in each of the front and the rear portions 40, 50, one or more air pathways 61, 71, 81, 91 formed in each of the front and rear side portions 60, 70, 80, 90 for air circulating purposes, and a number of recessed or curved depressions 42, 52 formed in each of the front and the rear portions 40, 50 and communicative with the air passages 41, 51 for guiding the air to flow into the air passages 41, 51 of the pedal body 10.

The pedal body 10 includes an inclined surface 62 formed in the inner and front side portion 60 and tilted outwardly or relative to the Y-axis for a tilting angle "A" ranged from five (5) to twenty five (25) degrees, and another inclined surface 92 formed in the outer and rear side portion 90 and tilted inwardly or relative to the Y-axis for a tilting angle "A" ranged from five (5) to twenty five (25) degrees, and the inclined surfaces 62, 92 in the inner and front side portion 60 and the outer and rear side portion 90 may be parallel to each other. The pair of pedal bodies 10 are mirror symmetric to each other (FIG. 5) and tilted outwardly and parallel to the feet 8 of the user for being effectively stepped or actuated by the user. The pedal body 10 may include a notch 72 formed in the inner and rear side portion 70, and another notch 82 formed in the outer and front side portion 80 for weight reducing purposes, or for preventing the pedal bodies 10 from being interfered by the other objects.

## Claims

1. A bicycle pedal comprising a pedal body (10) including a lateral spindle (11) parallel to an X-axis, and a Y-axis perpendicular to the X-axis, the pedal body (10) including an upper surface (20), a bottom surface (30), a front portion (40), a rear portion (50), an inner and front side portion (60), an inner and rear side portion (70), an outer and front side portion (80), and an outer and rear side portion (90), **characterized in that**:
the pedal body (10) includes a first inclined surface (52) provided in the inner and front side portion (60) and tilted outwardly and tilted relative to the Y-axis of the pedal body (10) for a tilting angle "A", and includes a second inclined surface (92) provided in the outer and rear side portion (90) and tilted inwardly and tilted relative to the Y-axis of the pedal body (10).

2. A bicycle pedal as claimed in claim 1, wherein the second inclined surface (92) is parallel to the first inclined surface (52) of the pedal body (10).

3. A bicycle pedal as claimed in claim 1 or 2, wherein the pedal body (10) includes a plurality of pegs (13) extended from the upper surface (20).

4. A bicycle pedal as claimed in one of claims 1 to 3, wherein the pedal body (10) includes a plurality of pegs (13) extended from the bottom surface (30).

5. A bicycle pedal as claimed in one of claims 1 to 4, wherein the pedal body (10) includes a notch (72) formed in the inner and rear side portion (70).

6. A bicycle pedal as claimed in one of claims 1 to 5, wherein the pedal body (10) includes a notch (82) formed in the outer and front side portion (80).

7. A bicycle pedal as claimed in one of claims 1 to 6, wherein the front portion (40) of the pedal body (10) is recessed, and the pedal body (10) includes at least one air passage (41) formed in the front portion (40) of the pedal body (10).

8. A bicycle pedal as claimed in one of claims 1 to 7, wherein the rear portion (50) of the pedal body (10) is recessed, and the pedal body (10) includes at least one air passage (51) formed in the rear portion (50) of the pedal body (10).

9. A bicycle pedal as claimed in one of claims 1 to 8, wherein the pedal body (10) includes at least one opening (21) formed in the upper surface (20), and at least one opening (31) formed in the bottom surface (30).

10. A bicycle pedal as claimed in one of claims 1 to 9, wherein the pedal body (10) includes at least one air pathway (61) formed in the inner and front side portion (60), at least one air pathway (71) formed in the inner and rear side portion (70), at least one air pathway (81) formed in the outer and front side portion (80), and at least one air pathway (91) formed in the outer and rear side portion (90).
